# EUROPEAN PATENT SPECIFICATION

(11) **EP 2 454 893 B1**
(45) Date of publication and mention of the grant of the patent: **18.09.2019**
(21) Application number: 10799320.6
(22) Date of filing: 16.07.2010
(51) Int. Cl.: H04W 4/00, H04L 29/06, H04L 29/08

(54) **METHOD TO DISCOVER AND SUBSCRIBE TO AN ENHANCED SYNDICATED FEED, CORRESPONDING MOBILE ELECTRONIC DEVICE AND MACHINE-READABLE MEDIUM**
VERFAHREN ZUR ERKENNUNG EINES ERWEITERTEN NEWSFEEDS UND ZUR TEILNAHME AN DIESEM UND ENTSPRECHENDE MOBILE ELEKTRONISCHE VORRICHTUNG UND MASCHINENLESBARES MEDIUM
PROCÉDÉ PERMETTANT DE DÉCOUVRIR ET DE S'ABONNER À UN FLUX DE SYNDICATION DE CONTENU AMÉLIORÉ, APPAREIL ÉLECTRONIQUE MOBILE ET SUPPORT LISIBLE PAR MACHINE CORRESPONDANTS

(30) Priority: 16.07.2009 US 226188 P
(43) Date of publication of application: 23.05.2012
(73) Proprietor: BlackBerry Limited, Waterloo, ON N2K 0A7 (CA)
(72) Inventor: MARTIN-COCHER, Gaelle Christine, Mississauga Ontario L4W 5P1 (CA); SHENFIELD , Michael, Mississauga Ontario L4W 5P1 (CA)
(74) Representative: Gill Jennings & Every LLP
(86) International application number: PCT/CA2010/001096
(87) International publication number: WO 2011/006246

(56) References cited:
- US-A1- 2007 225 047
- US-A1- 2008 244 091
- US-B2- 7 512 569
- TELEFON AB LM ERICSSON ET AL: "SFR working assumption", 3GPP DRAFT; S4-090530, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Sweden; 20090625, 25 June 2009 (2009-06-25), XP050356809, [retrieved on 2009-06-25]
- 3GPP: "3rd Generation Partnership Project;Technical Specification Group Services and System Aspects;Syndicated Feed Reception;Protocols and codecs(Release 9)", 3GPP DRAFT; TS26.XYZ-SFR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Sweden; 20090626, 26 June 2009 (2009-06-26), XP050356853, [retrieved on 2009-06-26]
- SA4 MBS SWG INTERIM CHAIRMAN1: "Draft report of MBS SWG during SA4#54", 3GPP DRAFT; S4-090561_MBS_MINUTES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Sweden; 20090626, 26 June 2009 (2009-06-26), XP050356837, [retrieved on 2009-06-26]

## Description

### FIELD OF THE DISCLOSURE

The present subject matter is related to syndicated feed reception.

### BACKGROUND

Content syndication is an XML-based format that allows web developers to describe and syndicate web site content. The syndicated feed is provided by publishing a list of content in a standardized format that can then be downloaded by feed reader programs that allow users to subscribe to the feeds.

Two common syndication formats include Really Simple Syndication (RSS) and Atom. The RSS 2.0 format is published by the RSS Advisor Board at RSSboard.org and the Atom syndication format is published by the Internet Engineering Task Force (IETF) Request for Comments (RFC) 4287. Atom and
RSS content complies with an Atom or RSS extensible markup language (XML) schema that provides a limited number of parameters. Such parameters describe the content and how an RSS and Atom reader can make use of it. Examples of such of parameters include: title, source, description, link, contributor, category, among others.

Atom and RSS schemas contain parameters that are used to provide a reference to additional content, such additional content being related to the syndicated feed fragment in which the reference is found. This additional content can be a media such as an audio or video, package in a file (e.g., 3GPP file format) or in a stream (RTSP); or can be an HTML page. As used herein, this additional reference is called an enclosure.

"SFR working assumption" 3GPP TSG-SA4 #54, S4-090530 and "3GPP; Technical Specification Group Services and System Aspects; Syndicated Feed Reception; Protocols and codecs (Release 9)" both describe using HTTP GET for external channel discovery.

The invention is defined by the claims. Various embodiments are defined in the dependent claims.

### BRIEF DESCRIPTION OF THE DRAWINGS

FIG. 1 is a system diagram according to an example embodiment;
FIG. 2 is a data flow diagram illustrating discovering an optimized feed via a URI, according to an example embodiment;
FIG. 3 is a data flow diagram illustrating discovering an optimized feed via an HTTP response header;
FIG. 4 is a data flow diagram illustrating discovering an optimized feed via an HTTP discovery request header;
FIG. 5 is a data flow diagram illustrating discovering an optimized feed via a UAProf profile.
FIG. 6 is a data flow diagram illustrating transmitting media capabilities.
FIG. 7 is a block diagram of a mobile electronic device according to an example embodiment.

### DETAILED DESCRIPTION

In an embodiment current Atom or RSS feeds are retrieved by an RSS/Atom parser in an HTTP stateless pull request. The open mobile alliance (OMA) dynamic content delivery (DCD) specification (Technical specification candidate version 1.0 as of June 12, 2009 available at http://www.openmobilealliance.org/) defines ways to optimize the delivery of Atom and RSS content by proxying the content on a server, such server being able to push, broadcast the content based on a variety of preferences such as delivery preferences, scheduling information, content type and mime-type of interest for a piece of user equipment (UE, e.g., a mobile electronic device) etc.

The OMA DCD specification assumes that a UE is registered to a DCD server at which the content is available. The OMA DCD specification further describes how to perform subscriptions to content channel (or feed) that are not available at the DCD server. However, DCD does not solve the problem of ad-hoc activation of the UE to the delivery server associated with discovered content and subscription to such content. For 3GPP syndicated feed reception (SFR), in an example embodiment, where such content is a syndicated feed and such server is a SFR server the problem translates into the following: when a UE discovers a feed (e.g. via a web browser) and provides the feed uniform resource identifier (URI) to the syndicated feed parser (i.e. SFR-enabled RSS or Atom parser), the feed parser should be able to determine if the feed is a regular Atom/RSS feed or if this is an SFR-optimized feed. Furthermore, in an embodiment, it should be possible at the feed discovery step to advertise available delivery methods (e.g. HTTP pull) and address/port of server at which the feed can be subscribed (subscription to the feed means ability to obtain initial content and content updates via pull, push or broadcast methods). Such information may allow an SFR-enabled feed reader to activate with and register to the previously unknown SFR delivery server and then subscribe to the discovered SFR feed to benefit of SFR-optimized delivery.

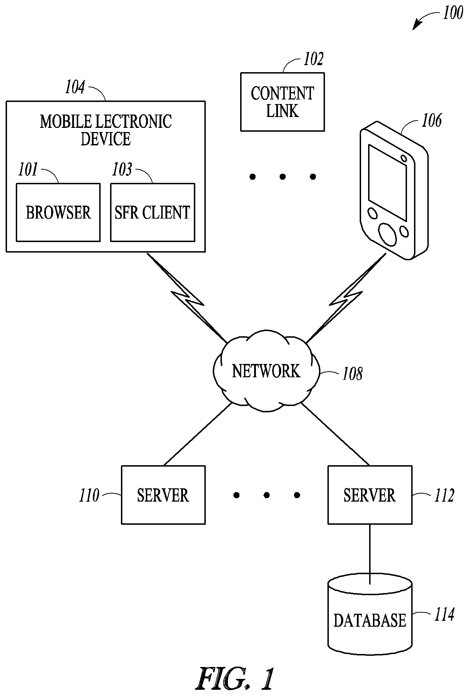

FIG. 1 is a system 100 illustration according to an example embodiment. The system 100 includes user equipment devices (e.g., mobile electronic devices 104, 106) that communicate over at least one network 108. The system 100 also includes at least one server 110, 112 that communicates over the at least one network 108.

The mobile electronic devices 104, 106 may include one or more network interface devices that are operable to communicate over the at least one network 108. The mobile electronic devices may include, but are not limited to, mobile telephones, portable computers, personal digital assistants, and other devices that may be carried by a user and provide wireless communication. Mobile telephones include wireless communication devices that have generally been referred to as cell phones. Mobile telephones may include a wide range of communication devices from portable phones with limited functionality beyond voice communication to portable phones capable of providing the functionality of a personal computer. Mobile electronic device 104 further includes a browser 101 and syndicated feed reception (SFR) client 103. The browser may be used to navigate to a data item (e.g., a web page) that includes a content link 102. The content link may identify one or more syndicated feeds managed by servers 110, 112. SFR client 103 may manage (e.g., subscribe to, communicate with one or more servers) a syndicated feed identified by the content link 102.

Connections between the mobile electronic devices 104, 106 and the at least one network 108 may include one or more wired or wireless connection possibilities. Examples of wireless connections may include connections to mobile radio networks operating at one or more frequencies according to one or more protocols of such networks (e.g., CDMA, GSM/EDGE UTRAN, E-UTRAN etc.). The wireless connections may also, or alternatively, include wireless networking connections, such as connections that provide IP connectivity (e.g., IEEE 802.11WiFi, WiMAX, etc.). The connections may also include shorter range wireless connections to other devices that provide access to the at least one network 108. An example of such a shorter range wireless connection is a Bluetooth wireless connection to another device, such as a personal computer, that is connected to the at least one network 108. A further example of such a shorter range wireless connection is a Near Field Communication (NFC) wireless, contactless connection between mobile electronic devices 104, 106, connected to the at least one network 108. Wired connections may include a wired Ethernet connection between a mobile electronic device 104, 106 and the at least one network 108. Other connections may include a wired connection, such as a Universal Serial Bus (USB) wired connection to a USB port of a computing device in communication with the at least one network 108.

The at least one network 108 may include any number of network types, such as one or more of mobile telephone networks, wireless computer networks, and wired computer networks. The at least one network may be interconnected with one or more of the Internet, Local Area Networks (LAN), proprietary networks including content limited to access only by subscribers of particular services, and other networks. Although two servers 110, 112 are illustrated, there may instead be one server, or more than two servers.

The servers 110, 112 may provide syndicated content (also referred to as a content feed) such as an Atom/RSS feed. In an embodiment, at least one of the servers is an optimized content feed server. For example, the server may be a syndicated feed reception (SFR) server. An optimized content server is a server capable of managing optimized content feeds for multiple mobile electronic devices equipped with an SFR client. In an embodiment, the combination of an SFR server and a mobile electronic device with an SFR client allows a syndicated feed to be delivered to the mobile electronic device according to preferences related to the capabilities of the mobile electronic device and settings of a content feed provider (e.g., broadcast at night, according to a publication schedule).

The servers are accessible by the mobile electronic devices 104, 106 over the at least one network 108. Content provided by the servers 110, 112 in the form of a syndicated feed may be stored on the respective server, in another location, such as in a database 114, accessible by a server 110, 112 or elsewhere as may be retrieved by the servers 110, 112. Content provided by the servers 110, 112 may also be derived content that may be calculated, assembled, or otherwise determined by the servers 110, 112, such as in response to a query or other request received from a mobile electronic device 104, 106.

In an example use of system 100, a user discovers (e.g. via a web browser) one or more syndicated feed to which the user wants to subscribe. The SFR client receives a single uniform resource identifier (URI) as an input and determines if it is an SFR optimized feed or if it is a regular Atom/RSS feed. In an embodiment, a mobile electronic device is already connected to one or more optimized content feed servers (also referred to as SFR servers). In a further embodiment, an external channel discovery and subscription mechanism allows an SFR client to discover and subscribe to content feeds that are not available at the SFR servers it is currently connected to.

As an example, a subscription model is described using a current SFR server already associated with a mobile electronic device. An internal subscription mechanism (i.e. via an SFR client) may be used to subscribe to a content feed. As an example, the SFR client may pass a subscription request to an SFR server that subscribes to the content feed on behalf of the SFR client as described in OMA DCD specification.

In a further example, an external subscription mechanism is utilized (e.g. via a web browser) to subscribe to an external feed. Such a discovery and subscription mechanism may not involve an SFR client and may not involve the SFR server (e.g. subscription on a specified web portal), though the SFR server is notified upon the subscription and in turn notifies the SFR client to validate the subscription as described in the OMA DCD specification.

In an embodiment activation/subscription to a new SFR server may be performed in a number of ways. For example, upon discovery of an external feed, the SFR client retrieves information about the SFR server associated with the feed. The SFR client activates with this new SFR server and the SFR client further subscribes to the feed. In a further example, when discovering an external feed, the SFR client provides its information in the discovery request (e.g. via HTTP headers or UAProf) and the SFR server uses server-initiated activation to establish a corresponding relationship with this SFR client.

### External channel discovery and subscription using current SFR server

In an internal subscription to an external channel scenario, the SFR client is already activated and registered to an existing SFR server and may already have subscribed to channels discovered via the internal discovery method. The user discovers a feed via means other than the SFR client (e.g. via a web browser) and, following the feed discovery process, the SFR client is provided with the feed URI. The SFR client relays the feed URI to the SFR server in order for the SFR server to perform a subscription to this external channel. The SFR client submits the subscription request with a message-ID, session-ID, Content-Address, and Subscription ID, if specified. The SFR server registers to the feed by exchanging a request for channel registration, a channel registration request, and a channel registration response with the content provided. A subscription request and a subscription response are also exchanged as described in OMA DCD specification.

In a scenario whereby the feed provider is not a SFR content provider and does not support the messages exchanged above, the SFR server retrieves the content from the feed provider via an HTTP GET request and inserts the relevant metadata in the feed both for optimized handling of enclosures and for optimized delivery.

In an external subscription for an external feed the user discovers a feed via other means (e.g. from a web portal) and provides the relevant information (e.g.,. a device context) to receive the feed on its SFR terminal as described in OMA DCD specification. The feed is routed via the SFR server to which the terminal is connected. (For instance, if a phone number is identified as belonging to a particular mobile network operator the feed provider knows the SFR server of that carrier)

### External discovery and activation/subscription via a new SFR server

In an embodiment, a user discovers a feed via means other than an SFR client (e.g. via a web browser) and, following the feed discovery, the SFR client is provided with a feed URI. The SFR Client is able to identify whether this feed is an SFR feed or a legacy Atom/RSS feed. To identify whether the feed is an SFR feed associated with a new SFR server, the SFR client and SFR server may use one of the following discovery and activation/subscription methods.

Upon discovery of an external feed, the SFR client gets information about the SFR server associated with this feed. The SFR Client initiates the activation process toward the new SFR server and subscribes to the feed. There are at least two options to disclose such information. In one embodiment, the SFR feed URI follows a predefined URI scheme that allows to specify the SFR server at which the feed is available and provide relevant connection parameters associated with the SFR server as part of feed URI. In another embodiment, the feed discovery response contains the SFR server information and connection parameters as part of the HTTP headers.

In a further example, when discovering an external feed, the SFR client in the discovery HTTP request, provides device context information (i.e. device identity and SFR capabilities). Such information may be provided using dedicated HTTP header(s) and/or attached User Agent Profile (UAProf), (e.g., either as an HTTP header or using multipart HTTP request). The SFR server (with which the external feed is associated) uses the server-initiated activation process to establish a relationship with this SFR client using provided device context to address the device. In an example, the HTTP header in the discovery request contains the SFR client connection information. Upon reception of such parameters, the SFR server initiates the activation process with the SFR client. In a further example, the SFR client provides the UAProf as a part of the discovery request. Upon reception of such parameters, the SFR server initiates the activation process with the SFR client. In some examples, the SFR server may use intermediary (e.g. another server such as delivery proxy) to petform the activation process with the SFR client.

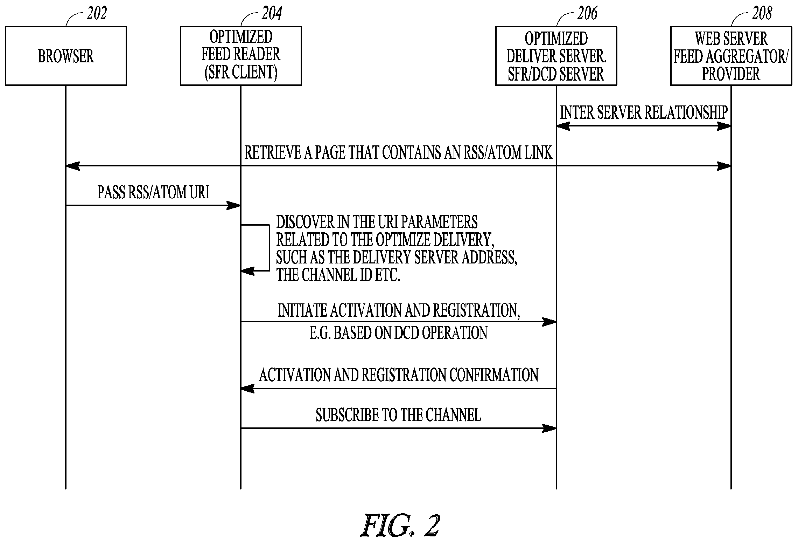

FIG. 2 is a data flow diagram illustrating discovering an optimized feed via a URI, according to an example embodiment. Illustrated is browser 202, optimized RSS/Atom parser (SFR client) 204, optimized delivery server (SFR server) 206, and web server and feed aggregator/provider 208. In an example embodiment, browser 202 and SFR client 204 reside in a mobile electronic device. In various embodiments, SFR server 206 and web server 208 may be the same machine and in other embodiment server 206 and server 208 are separate. In some embodiments, the servers 206, 208 are implemented as software. For example, the servers may be implemented inside one or more virtual machines running on a computer. In other embodiments, the functions of a web server and SFR server are spread across multiple machines or software implementations.

An SFR feed that is hosted or that can be retrieved on an SFR server may provide information within the URI for an SFR client to activate and subscribe to the required SFR server. In an embodiment, in order for SFR client to connect to a new SFR server, the following parameters are included in the URI: an SFR server address, proxy information, and data connection details. Also included is one of the following parameters to facilitate subscription to the discovered feed: a channel identifier and a content address.

In an embodiment the SFR address is the (URL) of the SFR server with which the SFR Client should activate. The proxy may be an address (IP address or hostname) of the proxy that should be used for communications with SFR server. This parameter may be omitted if no proxy is required to connect to the SFR server. The data connection details may include additional bearer-network-specific connection details e.g., APN, data connection username/password, etc. This parameter may be omitted if no additional data connection details are required to connect to the SFR server. In an embodiment the channel identifier is an identifier assigned to the channel corresponding to the discovered feed. In Atom/RSS the channel identifier parameter may correspond to feed identifier specified according to the Atom or RSS schema. The content-address may be a dedicated address (URI) associated with a discovered Atom or RSS feed. An example of SFR URI may be "http://www.SFR.org/abcTopNews ? server-ddress='l0.24.122.26:8080' ; channeliD= 'abcnews.com/feedTopNews'"

According to an example, upon receipt of the parameters, the SFR client sends an activation request message to the server address retrieved as part of the URI parameters. Once the SFR client activation is complete, an SFR client sends optional registration and channel subscription request(s). The SFR client may combine all 3 requests into a single request using multipart HTTP requests. With this approach the assumption is that authentication (basic, digest, or TLS) associated with activation request is sufficient to facilitate registration and subscription combined into the single transaction with activation. In other words, as registration and subscription requests are bundled with authenticated activation request there is no need to send session ID with these requests. This may be done using HTTP POST or PUT providing appropriate parameters in the message or using HTTP GET with REST-ful approach of overloading URL with the transaction parameters. In some examples, logical operations of activation, registration, and subscription can be combined into a single message. This message establishes relations between the SFR client and the SFR server and specifies SFR feed of interest for the SFR client.

In the example embodiment shown in FIG. 2, the activation, registration and subscription may be achieved using DCD procedures.

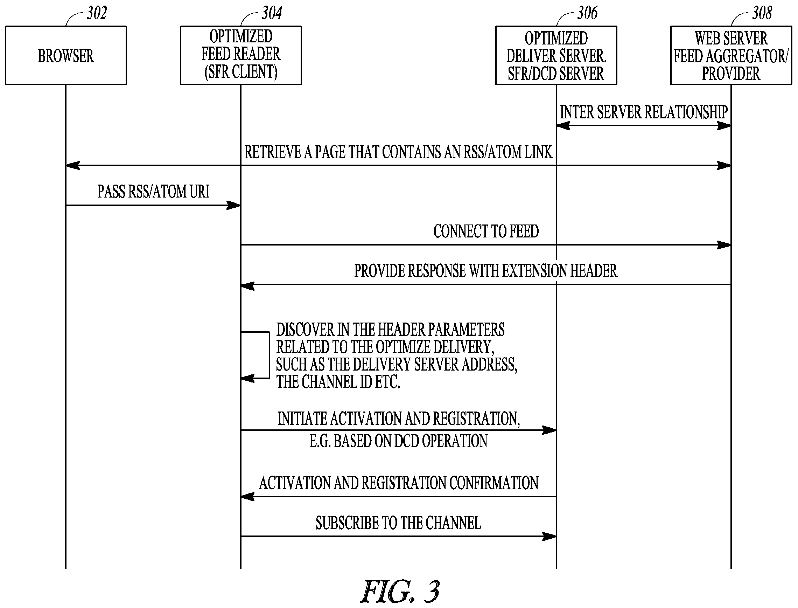

FIG. 3 is a data flow diagram illustrating discovering the details of an optimized feed via an HTTP response header. Illustrated is browser 302, SFR optimized feed reader (SFR client)
304, optimized delivery server (SFR server) 306, and web server and feed aggregator/provider 308. In an example , browser 302 and SFR client 304 reside in a mobile electronic device. In various examples, SFR server 306 and web server 308 may be the same machine and in other examples server 306 and server 308 are separate. In some examples, the servers 306, 308 are implemented as software. For example, the servers may be implemented inside one or more virtual machines running on a computer. In other examples, the functions of a web server and SFR server are spread across multiple machines or software implementations.

In an example, the browser is used to retrieve a page that contains an RSS/Atom link which is passed to the SFR optimized feed reader (SFR client). The SFR client fetches the link to get the feed. This corresponds to a discovery request to the feed provider. Upon receipt of the discovery request from an SFR client, the feed aggregator/provider provides server information and connection parameters in the HTTP header of the HTTP response as described below. In an example, the SFR header indicates to the parser client that this is an SFR enabled feed. In an example, the version is a required parameter for every response that carries an SFR enabled feed. In some examples, the feed aggregator/provider may attach such header to the initial request from the browser (e.g., if a browser request contains an indication that device is SFR-enabled). In such examples, the SFR client does not need to connect to the feed (as shown in FIG. 3) and can initiate activation with the SFR server according to the parameters in the header provided in response to the browser request.

SFR extension-header field:

| | |
|---|---|
| Message-header | = SFR |
| field-name | = Version |
| field-name | = server-address |
| field-name | = proxy |
| field-name | = connectionDetails |

One of the two parameters to facilitate the subscription for the discovered feed:

| | |
|---|---|
| field-name | = channeliD |
| field-name | = content-address |

Example of HTTP response header:

```
      HTTP/1.1 200 OK
      Content-Type: application/atom+xml; charset=UTF-8
      Content-Length: 265
      SFR:Version="1.0",server address="10.24.122.26:8080",
      channeliD="SFR.org/abcnews.com/feedTopNews"
```

Upon receipt of the response parameters, the SFR client sends an activation request message to the server-address retrieved from the corresponding header parameter. Once the SFR client activation is completed, an SFR client optional registration and channel subscription request is completed. The SFR client may combine all three requests into a single request using multipart HTTP requests as previously described. In some examples, logical operations of activation, registration, and subscription could be combined into a single message. This message establishes relations between the SFR client and the SFR server and specifies SFR feed of interest for the SFR client.

In the example shown in FIG. 3, the activation, registration and subscription may be achieved using DCD procedures.

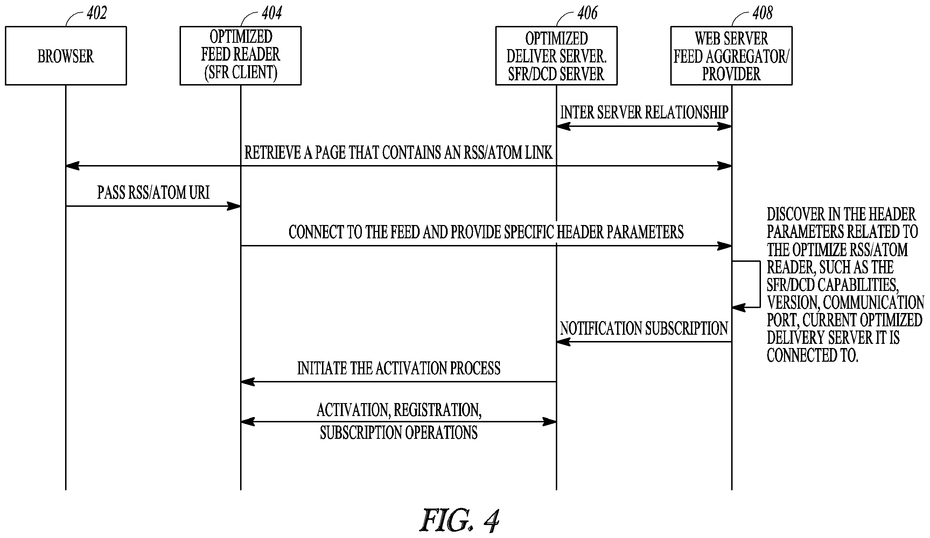

FIG. 4 is a data flow diagram illustrating discovering an optimized feed via an HTTP discovery request header. Illustrated is browser 402, SFR optimized feed reader (SFR client)
404, optimized delivery server (SFR server) 406, and web server and feed aggregator/provider 408. In an example browser 402 and SFR client 404 reside in a mobile electronic device. In various examples, the SFR server 406 and web server 408 may be the same machine and in other examples server 406 and server 408 are separate. In some examples, the servers 406, 408 are implemented as software. For example, the servers may be implemented inside one or more virtual machines running on a computer. In other examples, the functions of a web server and SFR server are spread across multiple machines or software implementations.

As illustrated, upon discovering of a feed, the SFR client provides the following SFR parameters in the header of the HTTP discovery request to provide device context and to announce its SFR related capabilities. In an example, the SFR extension-header field comprises:

| | |
|---|---|
| Message-header | = SFR |
| field-name | = Version |
| field-name | = DeviceiD |

Example of HTTP request header:

```
       HTTP GET version1.1
        SFR: Version="1.0",DeviceiD="89302720304013462899",
```

In an example, when the SFR client sends this request to the SFR feed URI, the SFR Server associated with the SFR feed sends to the SFR client a RequestForClientActivation message. This message triggers SFR client activation with this SFR server. Once the SFR client activation is completed this is followed by an SFR client registration and channel subscription request. The SFR client may combine all three requests into a single request using multipart HTTP requests as previously described.

In the example shown in FIG. 4, the activation, registration and subscription may be achieved using DCD procedures.

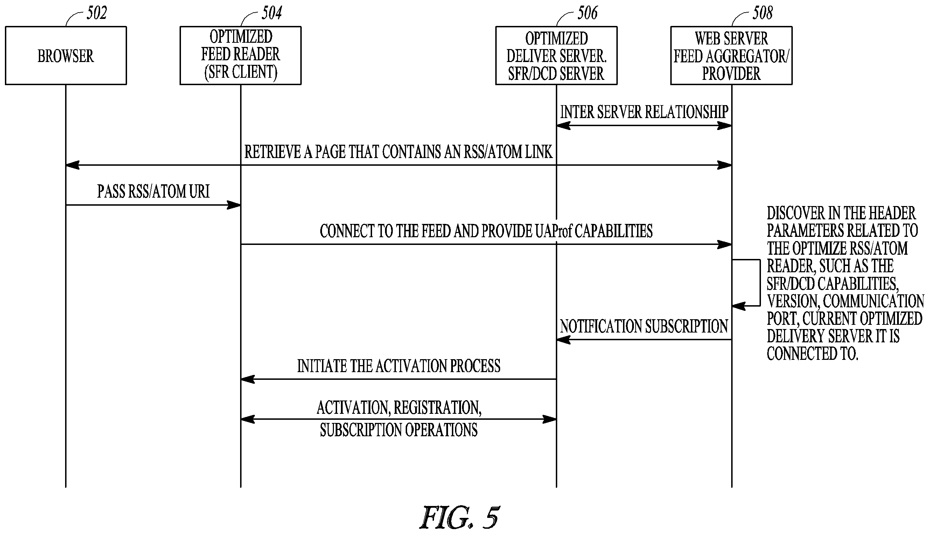

FIG. 5 is a data flow diagram illustrating discovering an optimized feed via a User Agent Profile (UAProf).
A UAProf may describe the capabilities of a mobile handset, including, but not limited to, vendor, model, screen size, and multimedia capabilities. Illustrated is browser 502, SFR optimized feed reader (SFR client) 504, optimized delivery server (SFR server) 506, and web server and feed aggregator/provider 508. In an example, browser 502 and SFR client 504 reside in a mobile electronic device. In various examples, SFR server 506 and web server 508 may be the same machine and in other examples server 506 and server 508 are separate. In some examples, the servers 506, 508 are implemented as software. For example, the servers may be implemented inside one or more virtual machines running on a computer. In other examples, the functions of a web server and SFR server are spread across multiple machines or software implementations.

In an example the SFR client passes the UAProf with the following extensions when sending the HTTP GET discovery request message to the feed URI. A UAProf

| | |
|---|---|
| Attribute | = SFR Version |
| Attribute | = DeviceiD |

Upon receipt of the extended UAProf, the new SFR server sends to the SFR client a RequestForClientActivation message as specified. This is followed by an SFR client optional registration and channel subscription request. The SFR client may combine all three requests into a single request using multipart HTTP requests as previously described. In some examples, logical operations of activation, registration, and subscription could be combined into a single message. This message establishes relations between the SFR client and the SFR server and specifies SFR feed of interest for the SFR client.

In the example shown in FIG. 5, the activation, registration and subscription may be achieved using DCD procedures.

### Alternative enclosures in content feed

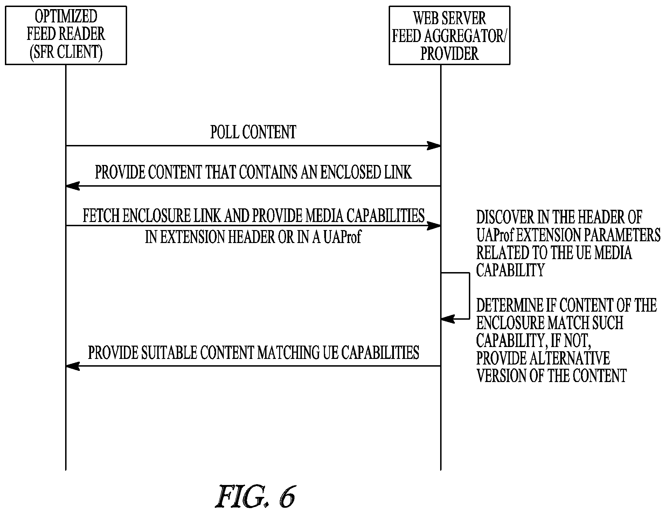

In the 3GPP SFR specification, an alternative enclosure may be defined, allowing to specify the mime-type, codec and parameters that relate to the content to be retrieved. FIG. 6 illustrates an example system in which a client announces the accepted media capabilities. In the case a feed is not provided via an SFR delivery server and contains such enclosures, the SFR client can declare supported media capabilities via an attached UAProf passed as an HTTP header in the request or via HTTP "accept" header utilizing media type declaration described in RFC 4281. The feed server receiving this HTPP request may then be able to determine if the content that is requested is in a suitable format or if an alternative version should be provided. If a suitable format is found, a response may be sent in the appropriate format.

In an example in which a header is used, the "accept header" from RFC 2616 is used with the following field and values when fetching a feed enclosure:

```
         Message header = Accept
         media-range = Should be used to indicate both the mime
 type and codec parameters as they are defined in RFC 4281 or 3GPP
 PSS specification.
         q = can be used to announce the level of
 preference for supported media if multiple content versions are
 available.
```

An example of an "accept header" that be used when fetching an enclosure or alternative enclosure is:

```
            HTTP GET version 1.1
            Accept: Video/3GP;H263/levell,3GP/Video;H264;Level=2
                      Audio/3GP;samr,
                      Image/png, Image/gif,
```

An example of a UAProf that may be used to declare supported mimetype may be extended with codec parameters as par RFC4281:

```
        <prf:CcppAccept>
          <rdf:Bag>
            <rdf:li>audio/3gpp; codecs="amr"</rdf:li>
             <rdf:li>image/gif</rdf:li>
             <rdf:li>video/3gpp; codecs="s263, samr" </rdf:li>
             <rdf:li>video/3GPP2; codecs="mp4v.20.9,
 mp4a.E1</rdf:li>
          </rdf:Bag>
        </prf:CcppAccept>
```

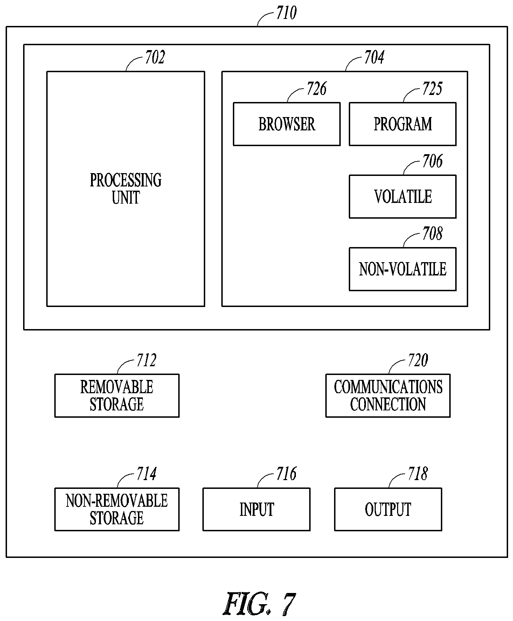

FIG. 7 is a block diagram of a computing device according to an example embodiment. In one embodiment, multiple such computer systems are utilized in a distributed network to implement multiple components in a transaction based environment. An object-oriented, service-oriented, or other architecture may be used to implement such functions and communicate between the multiple systems, devices, and components, such as in a networked computing environment described above with regard to the system 100 of FIG. 1.

One example computing device is in the form of a mobile electronic device 710. The mobile electronic device 710 is an example of the mobile electronic devices 104, 106 described above with regarding FIG. 1. The mobile electronic device 710 may include a processing unit 702, memory 704, removable storage 712, and non-removable storage 714. The processing unit 702 may include one or more processing units or may include one or more multiple-core processing units. Memory 704 may include volatile memory 706 and non-volatile memory 708. Mobile electronic device 710 may include a variety of device-readable media, such as volatile memory 706 and non-volatile memory 708, removable storage 712 and non-removable storage 714. The storage may include random access memory (RAM), read only memory (ROM), erasable programmable read-only memory (EPROM) & electrically erasable programmable read-only memory (EEPROM), flash memory or other memory technologies, or any other medium capable of storing machine-readable instructions and data that may be present in a mobile electronic device. Mobile electronic device 710 may include input 716, output 718, and a communication connection device 720.

The mobile electronic device 710 typically operates in a networked environment using the communication connection device 720 to connect to one or more networks, such as network 108 described above with regard to FIG. 1. Through the communication connection device 720, the mobile electronic device 710 may connect to one or more remote computers. The remote computer may include a personal computer (PC), server (such as servers 110, 112, also described with regard to FIG. 1), router, network PC, a peer device or other common network node, or the like. The communication connection device 720 may connect to various network types that may include a wireless telephone network, a Local Area Network (LAN), a Wide Area Network (WAN), the Internet, a proprietary subscription-based network, or other networks. The mobile electronic device 710 also may include wireless telephone capabilities to provide voice telephone service via a wireless telephone network.

Machine-readable instructions stored on a machine-readable medium are executable by the processing unit 702 of the mobile electronic device 710. The memory 704, removable storage 712, and non-removable storage 714 are some examples of articles including a machine-readable medium. For example, a program 725 with instructions that may be executed by the processing unit 702 to cause the mobile electronic device 710 to perform one or more of the methods described herein may be stored on a machine-readable medium, such as the memory 704. Other programs 725 may also be stored on a machine-readable medium, such as a browser application 726 providing web browsing functionality of the mobile electronic device 710. Further, the programs 725 may include an SFR client application that may be operable to subscribe to one or more SFR servers.

Another embodiment is in the form of a computing device, such as a mobile electronic device. The computing device in this embodiment includes at least one processor, at least one memory device, a network interface device, and a user interface device (e.g., display device). Stored in the at least one memory device is a SFR client application, and a browser application. In an example embodiment, the SFR client application is an application that is executable to manage SFR feeds.

It will be readily understood to those skilled in the art that various other changes in the details, material, and arrangements of the parts and method stages which have been described and illustrated in order to explain the nature of the inventive subject matter may be made without departing from the principles and scope of the inventive subject matter as expressed in the subjoined claims.

## Claims

1. A method in a mobile electronic device (104), the method comprising:
receiving, at a feed reader (204), a uniform resource indicator, URI, to a content feed;
retrieving parameters from the URI which is related to a content feed server (206), the content feed server being configured to provide for optimized reception of the content feed;
determining, from the parameters retrieved from the URI, whether the content feed is a syndicated feed reception 'SFR' feed as distinguished from a legacy ATOM or Really Simple Syndication 'RSS' feed; and,
when the content feed is an SFR feed, subscribing to the content feed at the content feed server according to an address and data connection details determined from the parameters retrieved from the URI, said address being one of: an address of the content feed server, an SFR server address, a content address and a proxy address.

2. The method of claim 1, further comprising performing one or more of an activation operation and a registration operation.

3. The method of claim 1 or 2, wherein retrieving parameters from the URI comprises:
retrieving one or more of a content feed server address, a delivery server address, a proxy address, data connection parameters, a channel identifier and a content address.

4. The method of claim 3, wherein the parameters retrieved by the mobile electronic device relate to an SFR server.

5. The method of any preceding claim, wherein the feed reader is an SFR enabled feed reader.

6. The method of any preceding claim, further comprising:
receiving an enclosure link from the content feed; and
sending media capabilities of the mobile electronic device to a content feed provider or to a content feed server, wherein sending media capabilities of a mobile electronic device comprises sending at least one of a codec and codec parameters that relate to content to be retrieved.

7. The method of claim 6, wherein the media capabilities of the mobile electronic device include at least one of a codec and codec parameters that relate to content to be retrieved.

8. The method of claim 7, wherein the media capabilities of the mobile electronic device are sent in a user agent profile included in Hypertext Transfer Protocol 'HTTP' header.

9. A mobile electronic device (104) comprising a feed reader (204) configured to carry out the method of any of claims 1 - 8.

10. A machine-readable medium with a set of instructions stored thereon, which when executed, cause a processor to perform the method of any one of claims 1 - 8.

## Patentansprüche

1. Verfahren in einer mobilen elektronischen Vorrichtung (104), das Verfahren umfassend:
Empfangen eines Uniform Resource Indicator, URI, an einem Feed Reader (204) für einen Content-Feed;
Abrufen von Parametern von dem URI, der mit einem Content-Feed- Server (206) verbunden ist, wobei der Content-Feed-Server konfiguriert ist, um einen optimierten Empfang des Content-Feed bereitzustellen;
Ermitteln, aus den aus dem URI abgerufenen Parametern, ob der Content-Feed ein syndizierter Feed-Empfangs- 'SFR'-Feed ist, der sich von einem Legacy ATOM- oder einem Really Simple Sindication 'RSS'-Feed unterscheidet; und
wenn der Content-Feed ein SFR-Feed ist, anmelden an dem Content-Feed an dem Content-Feed-Server gemäß einer Adresse und Datenverbindungsdetails, die aus den von dem URI abgerufenen Parametern ermittelt werden, wobei die Adresse eines ist aus: einer Adresse des Content-Feed-Servers, einer SFR-Serveradresse, einer Content-Adresse und einer Proxy-Adresse.

2. Verfahren nach Anspruch 1, ferner umfassend das Durchführen von einer oder mehreren aus einer Aktivierungsoperation und einer Registrierungsoperation.

3. Verfahren nach Anspruch 1 oder 2, wobei das Abrufen von Parametern aus dem URI umfasst:
Abrufen von einem oder mehreren aus einer Content-Feed-Server-Adresse, einer Lieferserver-Adresse, einer Proxy-Adresse, Datenverbindungsparametern, einer Kanalkennung und einer Content-Adresse.

4. Verfahren nach Anspruch 3, wobei die von der mobilen elektronischen Vorrichtung abgerufenen Parameter sich auf einen SFR-Server beziehen.

5. Verfahren nach einem vorhergehenden Anspruch, wobei der Feed-Reader ein SFR-aktivierter Feed-Reader ist.

6. Verfahren nach einem der vorhergehenden Ansprüche, ferner umfassend:
Empfangen eines Kapsel-Links von dem Content-Feed; und
Senden von Medienfähigkeiten der mobilen elektronischen Vorrichtung an einen Content-Feed-Provider oder an einen Content-Feed-Server, wobei das Senden von Medienfähigkeiten einer mobilen elektronischen Vorrichtung das Senden von mindestens einem aus einem Codec und Codec-Parametern ist, die sich auf abzurufenden Inhalt beziehen.

7. Verfahren nach Anspruch 6, wobei die Medienfähigkeiten der mobilen elektronischen Vorrichtung mindestens eines aus einem Codec und Codec-Parametern beinhalten, die sich auf abzurufenden Inhalt beziehen.

8. Verfahren nach Anspruch 7, wobei die Medienfähigkeiten der mobilen elektronischen Vorrichtung in einem Benutzer-Agentprofil gesendet werden, das in einem Hypertext Transfer Protocol-, HTTP'-, Header enthalten ist.

9. Mobile elektronische Vorrichtung (104), die einen Feed-Reader (204) umfasst, der konfiguriert ist, um das Verfahren nach einem der Ansprüche 1-8 auszuführen.

10. Maschinenlesbares Medium mit einer Reihe von darauf gespeicherten Befehlen, die bei Ausführung bewirken, dass ein Prozessor das Verfahren nach einem der Ansprüche 1-8 durchführt.

## Revendications

1. Procédé dans un dispositif électronique mobile (104), le procédé comprenant les étapes consistant à :
recevoir, au niveau d'un lecteur de flux (204), un indicateur de ressource uniforme, URI, vers un flux de contenu ;
récupérer des paramètres à partir de l'URI qui est lié à un serveur de flux de contenu (206), le serveur de flux de contenu étant configuré pour fournir une réception optimisée du flux de contenu ;
déterminer, à partir des paramètres récupérés à partir de l'URI, si le flux de contenu est un flux de réception de flux syndiqué 'SFR' tel que distingué depuis un flux ATOM ou de syndication vraiment simple 'RSS' existant ; et,
lorsque le flux de contenu est un flux SFR, s'abonner au flux de contenu au niveau du serveur de flux de contenu en fonction d'une adresse et de détails de connexion de données déterminés à partir des paramètres récupérés à partir de l'URI, ladite adresse étant l'une parmi : une adresse du serveur de flux de contenu, une adresse de serveur SFR, une adresse de contenu et une adresse proxy.

2. Procédé selon la revendication 1, comprenant en outre l'exécution d'une ou plusieurs d'une opération d'activation et d'une opération d'enregistrement.

3. Procédé selon la revendication 1 ou 2, dans lequel la récupération de paramètres à partir de l'URI comprend :
la récupération d'un ou plusieurs parmi une adresse de serveur de flux de contenu, une adresse de serveur de livraison, une adresse proxy, des paramètres de connexion de données, un identifiant de canal et une adresse de contenu.

4. Procédé selon la revendication 3, dans lequel les paramètres récupérés par le dispositif électronique mobile se rapportent à un serveur SFR.

5. Procédé selon l'une quelconque des revendications précédentes, dans lequel le lecteur de flux est un lecteur de flux adapté à SFR.

6. Procédé selon l'une quelconque des revendications précédentes, comprenant en outre les étapes consistant à :
recevoir un lien de pièce jointe depuis le flux de contenu ; et
envoyer des capacités de média du dispositif électronique mobile à un fournisseur de flux de contenu ou à un serveur de flux de contenu, où l'envoi de capacités de média d'un dispositif électronique mobile comprend l'envoi d'au moins l'un d'un codec et de paramètres de codec qui se rapportent à un contenu à récupérer.

7. Procédé selon la revendication 6, dans lequel les capacités de média du dispositif électronique mobile incluent au moins l'un d'un codec et de paramètres de codec qui se rapportent à un contenu à récupérer.

8. Procédé selon la revendication 7, dans lequel les capacités de média du dispositif électronique mobile sont envoyées dans un profil d'agent d'utilisateur inclus dans un en-tête de protocole de transfert hypertexte 'HTTP'.

9. Dispositif électronique mobile (104) comprenant un lecteur de flux (204) configuré pour réaliser le procédé selon l'une quelconque des revendications 1 à 8.

10. Support lisible par machine avec un jeu d'instructions stocké sur celui-ci, qui, lorsqu'il est exécuté, amène un processeur à effectuer le procédé selon l'une quelconque des revendications 1 à 8.
